# DEMANDE DE BREVET EUROPEEN

(11) **EP 1 447 315 A1**
(43) Date de publication de la demande: **18.08.2004**
(21) Numéro de dépôt: 03405083.1
(22) Date de dépôt: 13.02.2003
(51) Int. Cl.: B62M 1/10

(54) **Véhicule mu par une force musculaire humaine**

(71) Demandeur: Esposito, Ciro, 1844 Villeneuve VD (CH)
(72) Inventeur: Esposito, Ciro, 1844 Villeneuve VD (CH)

(57) **Abrégé**

Le conducteur du véhicule actionne le pédalier (1) au moyen des pédales (20). Les cames (16) distribuées sur l'arbre à cames (17) font osciller les leviers à bascule (13) et les leviers d'armage (9), ce qui amène les ressorts (7) successivement dans leur position d'armage maximum. Durant le mouvement de retour, les paliers (11) solidaires des leviers d'armage (9) entraînent l'arbre moteur commun (10), ce qui fait tourner les roues (5) reliées à l'arbre (10) par l'intermédiaire d'un engrenage planétaire, d'un arbre moteur secondaire, et d'une transmission à chaîne ou poulie avec un changement de vitesse.

## Description

La présente invention concerne les véhicules à roues mus par une force musculaire humaine. Elle vise à faciliter l'utilisation de tels véhicules, notamment vélos ou tricycles, aux utilisateurs habituels, et à élargir le cercle des utilisateurs potentiels en créant un véhicule mieux accessible qu'actuellement à des personnes musculairement affaiblies ou handicapées, à des personnes âgées, etc. Elle vise également à fournir un véhicule permettant des performances supérieures à celles des vélos ou tricycles connus jusqu'à maintenant.

Les véhicules du genre vélo ou tricycle possèdent en général un organe d'entraînement rotatif constitué par un pédalier et les moyens de transmission de l'énergie sont une transmission à chaîne allant du pédalier au moyeu de la ou des roues motrices. Très souvent, cette transmission est équipée d'un changement de vitesse qui peut être interne au moyeu ou extérieur et prendre alors la forme d'un dérailleur. La particularité de ces systèmes connus est que l'énergie nécessaire pour assurer le déplacement du véhicule à la vitesse désirée doit être fournie instantanément et avec l'intensité nécessaire à chaque instant par la force musculaire du conducteur, à moins que le véhicule se déplace en roue libre, ce qui a alors nécessité antérieurement le développement d'une force supérieure à celle qui était nécessaire au déplacement du véhicule.

Par conséquent, un des buts de la présente invention est de permettre au conducteur du véhicule d'égaliser le développement de sa force musculaire. Pour cela, on intercale un accumulateur d'énergie entre l'organe d'entraînement et la ou les roues motrices afin de rendre l'effort de propulsion aussi constant que possible.

A cet effet, le véhicule selon l'invention présente les caractéristiques de la revendication 1 ou de l'une des revendications 2 à 6 annexées.

On décrit, ci-après, à titre d'exemple, une forme d'exécution et une variante principale de l'objet de l'invention, tout en mentionnant différentes variations possibles dans l'exécution des parties essentielles.
Au dessin annexé :
- la fig. 1 est une vue en élévation latérale de la forme d'exécution donnée à titre d'exemple,
- la fig. 2 est une vue en plan de dessus simplifiée du véhicule de la fig. 1,
- la fig. 3 en est une vue en élévation depuis l'arrière,
- les fig. 4 et 5 sont des vues en élévation latérale simplifiées montrant le système d'accumulation d'énergie et la liaison d'armage dans deux positions d'armage,
- les fig. 6 et 7 sont des vues en plan de dessus de l'arbre à cames dans les positions respectives des fig. 4 et 5, et
- la fig. 8 est une vue en élévation analogue aux fig. 4 et 5 montrant la connexion de retour dans la variante d'exécution montrée en exemple.

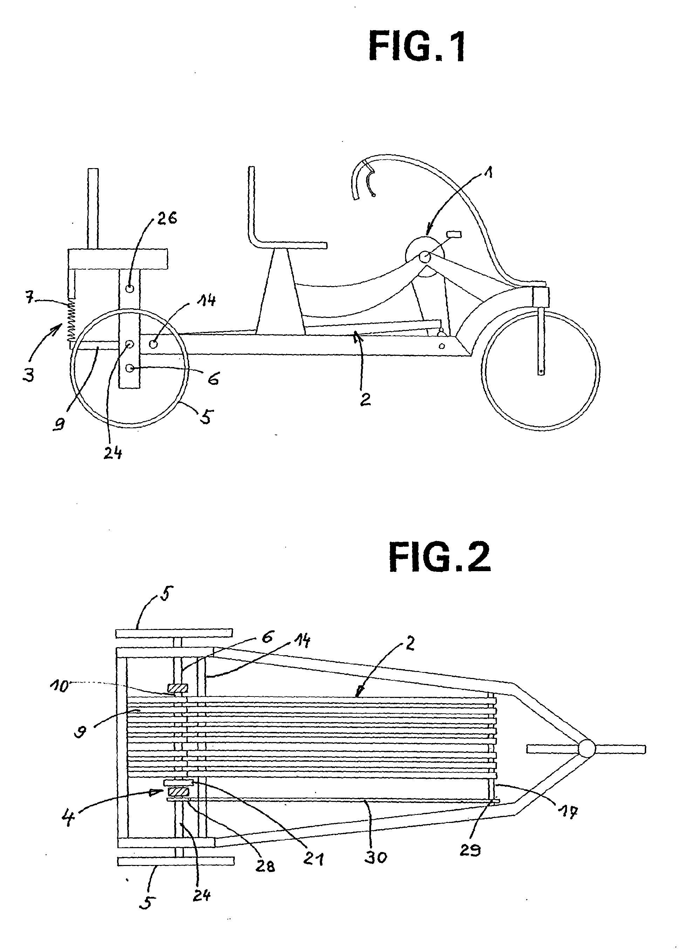

Il résulte des fig. 1 et 2 que le véhicule décrit est un tricycle avec un pédalier 1, une liaison d'armage 2, un système d'accumulation d'une réserve d'énergie 3 et une liaison de propulsion 4 assurant l'entraînement de deux roues arrière 5 fixées sur un arbre d'entraînement 6.

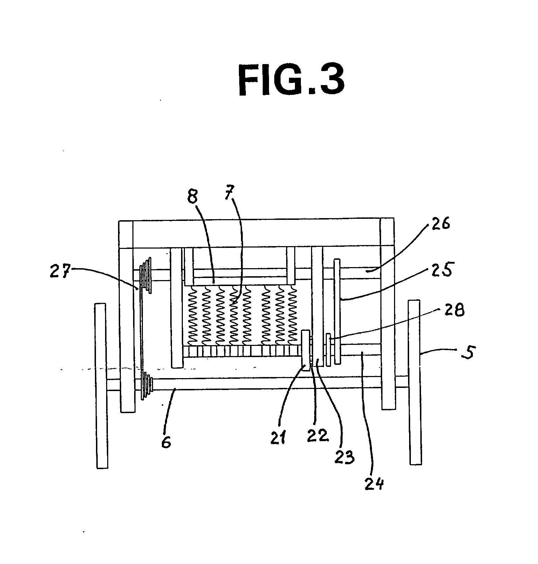

Le système d'accumulation 3 se compose, dans la forme d'exécution décrite, d'une série de huit ressorts à boudin 7 (fig. 3) fixés par leur extrémité supérieure à une barre de retenue horizontale 8 rigidement fixée au bâti du véhicule. On notera que la hauteur de cette barre par rapport au bâti pourrait être réglable pour permettre de donner aux ressorts 7 un préarmage voulu.

A son extrémité inférieure, chaque ressort 7 appuie sur l'extrémité arrière d'un levier d'armage 9. Les leviers d'armage 9 font partie de la liaison d'armage désignée de façon générale par 2, mais ils font également partie comme on le verra plus loin de la liaison de propulsion désignée par 4. Ils sont montés pivotant sur l'axe d'un arbre moteur 10 et présentent à leur extrémité avant un secteur denté 11 qui est en prise, comme on le voit aux fig. 2, 4 et 5, avec un secteur denté 12 homologue situé à l'extrémité arrière d'un levier à bascule 13 pivotant sur un axe de bascule 14.

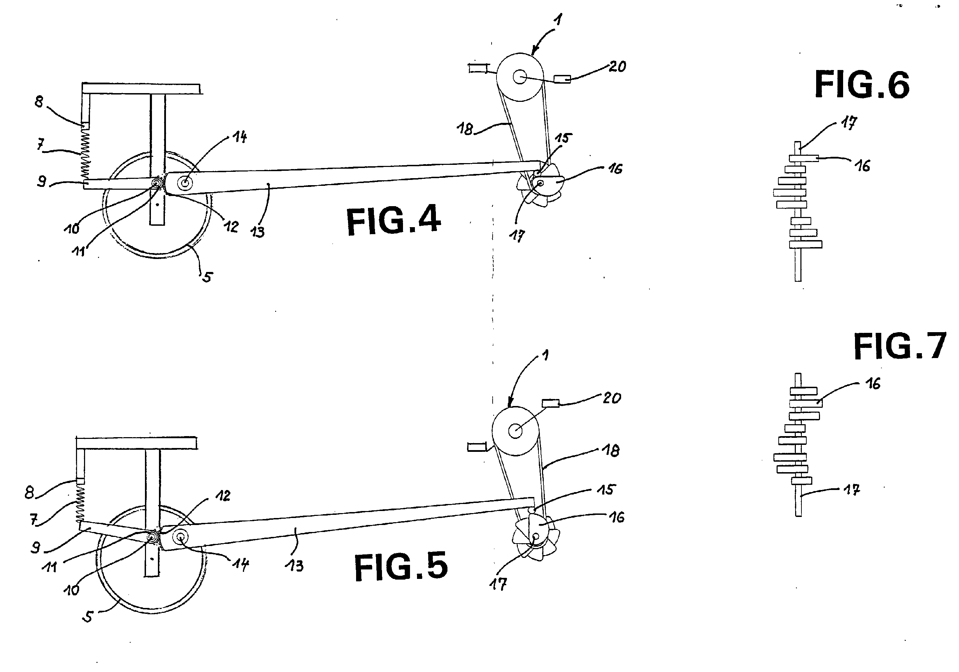

Ainsi, la liaison d'armage 2 comporte un faisceau de huit leviers à bascule (fig. 2) rectilignes et parallèles, pourvus chacun à son extrémité avant d'un palpeur 15 coopérant avec l'une des huit cames semblables 16 rigidement montées sur l'arbre à cames 17 (fig. 4 et 5). Enfin, cette liaison d'armage est complétée par un entraînement à poulie et courroie 18, remplacé éventuellement par un système à chaîne et roue dentée, transmettant à l'arbre à cames 17 l'impulsion rotative imprimée à la liaison d'armage par le pédalier 1 et la paire de pédales 20.

Le fonctionnement du système se comprendra quand on aura décrit les détails de la liaison de propulsion 4, mais auparavant, il convient de noter que les cames 16 sont toutes de même forme et même dimension. Leur contour, en demi-lune, est tracé de manière à commander un armage progressif des ressorts 7. Elles sont fixées sur l'arbre 17 chacune au voisinage d'une extrémité du diamètre de la demi-lune. Lorsque l'arbre 17 tourne dans le sens horaire, chaque came soulève le levier à bascule qu'elle commande jusqu'au sommet de son contour convexe, puis quand la portion rectiligne de son contour se trouve en regard du palpeur 15, la bascule est ramenée dans sa position initiale. Comme on le voit aux fig. 4 et 5, les huit cames 16 sont décalées angulairement de 45 degrés l'une par rapport à l'autre. Les fig. 6 et 7 montrent en plan de dessus les positions des cames 16 et de l'arbre à cames 17 correspondant aux deux positions de la liaison d'armage des fig. 4 et 5. Entre ces deux positions, l'arbre 17 a tourné dans le sens horaire de ¾ de tour. Le levier à bascule 13 a pivoté dans le sens anti-horaire autour de l'axe 14, ce qui a entraîné un pivotement correspondant dans le sens horaire du levier d'armage 9, comprimant ainsi le ressort 7.

Comme on l'a indiqué plus haut, tous les leviers d'armage 9 pivotent sur l'arbre moteur commun 10. Chacun de ces leviers est monté sur un palier à roulement 11 qui est relié à l'arbre moteur 10 par un dispositif anti-retour. Ainsi, quand le levier 9 a atteint la position supérieure représentée à la fig. 5, la force du ressort 7 lui imprime un mouvement de rotation dans le sens anti-horaire et son palier à roulement est alors accouplé à l'arbre moteur 10.

Les éléments de la liaison de propulsion sont visibles aux fig. 1 à 3. L'arbre moteur 10 entraîne le plateau d'un engrenage planétaire 21 dont les deux satellites, montés sur des axes 22 fixés au montant 23 du bâti, entraînent un pignon central (non visible à la fig. 3), calé sur un arbre moteur secondaire 24. Une liaison à chaîne ou courroie 25 transmet la rotation de l'arbre 24 à un arbre intermédiaire 26 relié lui-même par un système de changement de vitesse 27 à l'arbre d'entraînement 6. Le changement de vitesse 27 est représenté à la fig. 3 comme un système de poulies à étages complémentaires et courroie de transmission mais il est bien évident qu'il pourrait aussi être de n'importe quel type connu.

En marche normale, lorsque le conducteur du véhicule actionne le pédalier 1 au moyen des pédales 20, l'énergie qu'il communique au système d'armage est accumulée dans les ressorts 7 qui s'arment progressivement tant que la force de résistance du véhicule due à son inertie est supérieure à la force des ressorts. Il s'établit un équilibre entre le degré d'armage de l'accumulateur d'énergie et la vitesse du véhicule, ce qui régularise le développement de l'effort sur le pédalier.

Bien entendu, le pédalier pourrait être remplacé par un système à commande à main, par exemple à bras oscillant autour d'un axe vertical. Comme autres variantes possibles, on indiquera encore que les organes élastiques 7 pourraient être conçus différemment des ressorts à boudin décrits : par exemple, comme des vérins pneumatiques ou comme des ressorts spiraux. Leur nombre n'est évidemment pas limité à 8 et il n'est pas nécessaire qu'ils soient tous identiques.

Enfin, alors que dans la forme d'exécution décrite, la liaison d'armage et la liaison de propulsion actionnent les ressorts à la même extrémité, elles pourraient tout aussi bien les actionner à leurs deux extrémités, à l'instar de ce qui se passe avec le ressort moteur d'un mouvement d'horlogerie.

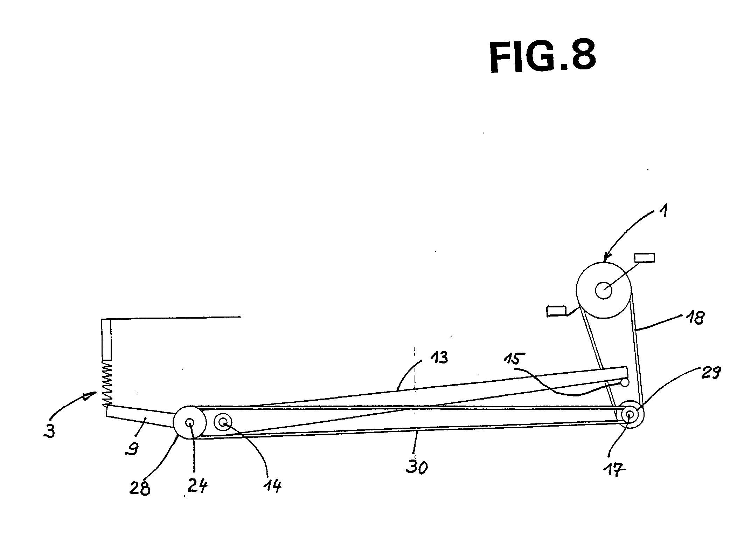

La fig. 8 montre encore une adjonction qu'il est possible de prévoir sur le véhicule décrit. Sur l'arbre à cames 17 et sur l'arbre moteur secondaire 24, on a prévu des poulies 28 et 29 ainsi qu'une courroie 30, de telle sorte qu'il se produit une transmission de couple entre l'arbre à cames 17 et l'arbre moteur secondaire 24. Ce dispositif auxiliaire contribue encore à l'égalisation des couples moteurs exercés par le conducteur sur le pédalier avec le couple résistant que les conditions de la route, le poids du véhicule et son inertie opposent au déplacement.

La fig. 1 suggère encore quel peut être le design d'un tricycle construit selon la présente invention, mais il est bien évident que les connaissances de l'homme du métier et l'art du designer pourront intervenir pour varier dans un très large éventail de possibilités la disposition, le style et les éléments de détail des véhicules destinés à une fabrication industrielle, que ce soit en grande série ou en applications spécialisées.

## Revendications

1. Véhicule à roues mu par une force musculaire humaine, comprenant un organe d'entraînement (1) actionné en rotation autour d'un axe et des moyens de transmission d'énergie dudit organe rotatif à au moins une roue motrice, **caractérisé en ce que** lesdits moyens de transmission comportent un système (3) d'accumulation d'une réserve d'énergie avec au moins un organe élastique (7), une liaison d'armage (2) entre l'organe d'entraînement et le système d'accumulation, permettant l'armage du ou des organes élastiques et une liaison de propulsion (4) entre le système d'accumulation d'énergie et la ou les roues motrices (5).

2. Véhicule selon la revendication 1, **caractérisé en ce que** le système d'accumulation d'énergie (3) comporte une pluralité d'organes élastiques (7) et **en ce que** la liaison d'armage (2) comporte un arbre à cames (17) avec autant de cames (16) que d'organes élastiques, accouplé à l'organe rotatif (1) d'entraînement, et des liaisons à leviers oscillants (13, 9) entre chaque came et un des organes élastiques.

3. Véhicule selon la revendication 2, **caractérisé en ce que** chacune des liaisons à leviers oscillants (13, 9) comprend un levier à bascule (13) en contact par un palpeur (15) à son extrémité avant avec la came (16) qui le contrôle et pourvu d'un secteur denté (12) à son extrémité arrière, et un levier d'armage (9) relié par son extrémité arrière à l'organe élastique (7) qu'il charge et engrenant à son extrémité avant dans le secteur denté (12) du levier à bascule (13) correspondant, chacun desdits leviers d'armage étant solidaire d'un palier à accouplement unidirectionnel (11) monté sur un arbre moteur commun (10) faisant partie de la liaison de propulsion.

4. Véhicule selon la revendication 3, **caractérisé en ce que** la liaison de propulsion (4) comporte à partir dudit arbre moteur commun (10) un engrenage planétaire (21) actionnant un arbre moteur secondaire (24), et une transmission à chaîne ou courroie (25, 26, 27, 6) avec un dispositif de changement de vitesse, la liaison de propulsion agissant sur la ou les roues motrices (5).

5. Véhicule selon l'une quelconque des revendications précédentes, **caractérisé en ce qu'**il comporte une connexion de retour (28, 30, 29, 18), à chaîne, courroie ou engrenage entre la liaison de propulsion (4) et l'organe d'entraînement rotatif (1).

6. Véhicule selon la revendication 5, **caractérisé en ce que** ladite connexion de retour relie l'arbre moteur secondaire (24) à l'arbre à cames (17).
